# EUROPEAN PATENT SPECIFICATION

(11) **EP 2 780 608 B1**
(45) Date of publication and mention of the grant of the patent: **27.03.2019**
(21) Application number: 12850292.9
(22) Date of filing: 09.11.2012
(51) Int. Cl.: F16F 3/04, B21F 35/04

(54) **HELICAL SPRING ASSEMBLY FOR A TORSIONAL VIBRATION DAMPER AND METHOD FOR PRODUCING A SUPPORTING WIRE FOR SUCH A HELICAL SPRING ASSEMBLY**
SCHRAUBENFEDERANORDNUNG FÜR EINEN TORSIONSSCHWINGUNGSDÄMPFER UND VERFAHREN ZUR HERSTELLUNG EINES TRAGSEILES FÜR EINE SOLCHE SCHRAUBENFEDERANORDNUNG
ENSEMBLE RESSORT HÉLICOÏDAL POUR AMORTISSEUR DE VIBRATIONS DE TORSION ET PROCÉDÉ DE PRODUCTION D'UN FIL DE SUPPORT POUR UN TEL ENSEMBLE RESSORT HÉLICOÏDAL

(30) Priority: 17.11.2011 DE 102011118787
(43) Date of publication of application: 24.09.2014
(73) Proprietor: BorgWarner Inc., Auburn Hills, MI 48326 (US)
(72) Inventor: BOELLING, Jochen, 76534 Baden-Baden (DE); HALM, Christian Bernhard, 69190 Walldorf (DE)
(74) Representative: Leckel, Ulf
(86) International application number: PCT/US2012/064312
(87) International publication number: WO 2013/074397

(56) References cited:
- EP-A1- 0 711 933
- EP-A1- 1 927 781
- DE-A1- 10 222 778
- DE-A1-102004 062 694
- DE-A1-102005 016 897
- GB-A- 2 308 173
- JP-A- S6 323 037
- US-A- 4 118 020
- US-A- 6 131 487

## Description

The present invention relates to a helical spring assembly for a torsional vibration damper with an outer helical spring and an inner helical spring, which is arranged in the interior of the outer helical spring and is supported against the outer helical spring in a longitudinal spring direction by means of a supporting element.

DE 196 03 248 A1 describes a rotary vibration damper with a helical spring assembly, which is arranged between the input and output sides of the rotary vibration damper. The known helical spring assembly comprises an outer helical spring and an inner helical spring, the latter being arranged in the interior of the outer helical spring and supported against the outer helical spring in a longitudinal spring direction by means of a supporting element. The supporting element is composed of an annular region and an axial extension adjoining the annular region. While the annular region of the supporting element extends outwards in such a way in a radial direction that the supporting element is supported against the end face of the helical spring assembly in the longitudinal direction by means of the annular region, the axial extension extends both into the interior of the outer helical spring and into the interior of the inner helical spring. At the same time, the inner helical spring is conformed in such a way to the axial extension that the inner helical spring is fastened to the outside of the axial extension in a longitudinal spring direction by means of its turns.

The helical spring assemblies known from the prior art have proved useful, but have the disadvantages of a complex structure and difficult manufacture and assembly.

DE 102 22 778 A1 describes a supporting element for a helical spring assembly, said supporting element being a supporting wire. The supporting wire extends in a ring-like fashion and comprises two end portions. The known supporting wire has a simple structure and may be manufactured easily. However, the known supporting wire tends to be damaged when in use, while it could not ensure a reliable support of the inner and outer helical spring of the helical spring assembly.

On the basis of the prior art, it is an object of the present invention to provide a helical spring assembly for a torsional vibration damper which on the one hand is simplified with regard to structure, manufacture and assembly while on the other hand ensuring reliable support of the inner helical spring against the outer helical spring in a longitudinal spring direction by means of the supporting element while damaging of the supporting element is avoided. It is a further object of the present invention to provide a method for producing a supporting wire for use as a supporting element in the helical spring assembly for the torsional vibration damper.

Said object is achieved by the features respectively stated in patent claims 1 and 12. Advantageous embodiments of the invention constitute the subject matter of the subclaims.

The helical spring assembly according to the invention is designed for a torsional vibration damper. The helical spring assembly may for example be arranged between the input side and the output side of the torsional vibration damper, in order to bring about rotary vibration damping between the input and output sides of the torsional vibration damper. The helical spring assembly comprises an outer helical spring and an inner helical spring. Said helical springs preferably each comprise a bow spring, whose longitudinal spring axis is therefore bent or curved. The turns of the outer helical spring surround a spring interior, within which the inner helical spring is arranged, the two helical springs preferably being arranged coaxially relative to one another with regard to their longitudinal spring axis. Furthermore a supporting element is provided. The supporting element is constructed and/or arranged such that the inner helical spring is supported against the outer helical spring via the supporting element in a longitudinal spring direction. In this case it is preferable for the inner helical spring to be supportable or supported against the outer helical spring by means of the supporting element in both mutually opposed longitudinal spring directions. In the helical spring assembly according to the invention the supporting element is formed of a supporting wire at least partially encompassing the inner helical spring. The supporting wire, which is preferably formed of a steel wire, engages on the one hand between two successive turns of the one helical spring and on the other hand between two successive turns of the other helical spring. In principle, the supporting wire could take the form of a closed wire ring, which would thus have no free ends and adjacent end portions. However, to simplify arrangement or fastening of the supporting wire on or to the two helical springs, the supporting wire has two end portions. In this context, an end portion should be understood to mean that portion of the supporting wire which directly adjoins or forms the free end of the supporting wire, the supporting wire consequently also comprising two free ends. Further, the supporting wire comprises at least one supporting portion arranged between the end portions of the supporting wire and protruding in a radial direction, said supporting portion engaging between two successive turns of the other helical spring. The support of the supporting wire against the successive turns of the other helical spring is primarily effected, preferably solely, by means of the radially protruding supporting portion of the supporting wire, such that the end portions of the supporting wire and the helical springs are protected from damage. Depending on the variant embodiment, the supporting portion may extend radially inwards or radially outwards, the latter variant being preferred, in which moreover the end portions engage between the successive turns of the inner helical spring, while the at least one radially outwardly projecting supporting portion engages between the two successive turns of the outer helical spring.

Using a supporting element in the form of a supporting wire instead of a supporting element composed of an annular region and an axial extension allows various advantages to be achieved. For instance, the supporting wire is significantly lighter-weight and less bulky than the known supporting elements, such that a particularly simple and compact structure of the helical spring assembly may be achieved. Moreover, manufacture of the supporting wire is simpler than is the case with conventional supporting elements comprising the annular region and axial extension. Manufacture of the entire helical spring assembly is therefore also simplified. Furthermore, inter alia because of its only slight extent, the supporting wire may be positioned relatively simply in its desired position, in which the two helical springs may be or are supported against one another in a longitudinal spring direction by means of the supporting wire. Assembly of the helical spring assembly is therefore also simplified. Furthermore, use of the space-saving supporting wire has the advantage that it may also be arranged a relatively long way from the end face of the helical spring assembly, in order to bring about mutual support in a longitudinal spring direction. Collision of the supporting element in the form of the supporting wire with a driving element on the input or output side of the torsional vibration damper may therefore be reliably ruled out, such an arrangement of the supporting element in the form of the supporting wire being preferred in the case of a torsional vibration damper.

In principle, the above-mentioned end portions of the supporting wire could be constructed or arranged such that they each engage both between the successive turns of the one helical spring and between the successive turns of the other helical spring; however in a preferred embodiment of the helical spring assembly according to the invention at least one of the two end portions engages between the successive turns of the one helical spring, but not between the successive turns of the other helical spring. This is preferably true of both end portions. In this case, the two end portions may for example each engage between the successive turns of the same helical spring, as is preferred, or the one end portion engages between the successive turns of the one helical spring, while the other end portion engages between the successive turns of the other helical spring. In this embodiment it is further preferred for the at least one end portion or both end portions to engage between the successive turns of the inner helical spring. Irrespective of the particular variant embodiment, this embodiment has the advantage that damage or fatigue phenomena both in the supporting wire and in the successive turns in the region of the free ends of the supporting wire may be particularly effectively prevented, such that the mode of operation of both the supporting wire and the adjacent helical spring is ensured in the long term, the occurrence also being prevented in this region of dirt particles formed from particles abraded or broken off from the supporting wire or the respective helical spring. In other words, reliable and contamination-free operation of the supporting wire and the helical spring assembly is ensured.

In principle, the above-mentioned at least one end portion could be arranged only in part between the successive turns of the one helical spring, such that the stated end portion protrudes from this space in a radial direction without at the same time engaging in the space between the successive turns of the other helical spring. In order however to achieve a particularly compact structure of the helical spring assembly and reliably to prevent engagement of the end portion in the space in the other helical spring in the various load situations, in a further preferred embodiment the at least one end portion of the helical spring assembly according to the invention is accommodated fully in the space between the successive turns of the one helical spring. This preferably applies mutatis mutandis to the other end portion, which is accommodated fully in the space between the successive turns of the other, preferably however likewise the same, helical spring. Full arrangement in the space is here achieved, according to the present embodiment, at least when the helical spring assembly is in the relaxed state, but preferably also when the helical spring assembly is in the completely compressed state, the size of the at least one end portion being matched accordingly to the size of the helical spring between whose turns the respective end portion is arranged.

In principle, a radially protruding supporting portion on the supporting wire would be sufficient. In a further advantageous embodiment of the helical spring assembly according to the invention, however, at least two supporting portions are provided on the supporting wire. It has been found that this enables significantly better and more uniform support in the longitudinal spring direction. It has also been found that, in the case of two helical springs with opposing winding directions, the total length of two or more supporting portions may be greater in a circumferential spring direction than the length of just one supporting portion in the circumferential direction, especially since the length thereof is more or less severely limited depending on turn pitch due to the opposing direction of winding of the two helical springs. For the purposes of uniform support of the two helical springs against one another in a longitudinal spring direction, it has additionally proved sensible for the at least two supporting portions to be offset by 180° relative to one another in a circumferential spring direction, as is furthermore preferred in this embodiment.

In a further preferred embodiment of the helical spring assembly according to the invention, the supporting wire is conformed to the helical springs in such a way that it engages between the successive turns of the other helical spring with just the at least one supporting portion. In this way, predetermined points of engagement or zones of engagement are provided particularly simply on the other helical spring, such that reliable and uniform support is ensured, while the other portions of the supporting wire, i.e. for example the end portions or further portions between the end portions, which do not form a supporting portion, do not engage between the successive turns of the other helical spring.

To bring about equally reliable and uniform support of the two helical springs against one another in a longitudinal direction by means of the supporting wire, the at least one supporting portion engages between the successive turns of the other helical spring over an angle of wrap which amounts to at least 10°. In this embodiment it is preferable for the angle of wrap to amount to at least 20°, particularly preferably at least 40°, in order further to reinforce the stated advantages. Nevertheless, in this embodiment it has proven advantageous for the supporting portion to engage between the successive turns of the other helical spring over an angle of wrap which amounts to no more than 75°, as is the case in a preferred variant of this embodiment. This limitation of the angle of wrap to no more than 75° ensures, in particular in the case of helical spring assemblies which comprise helical springs with mutually opposing directions of winding, that the supporting wire is not too strongly tensioned between the helical springs, such that not only is the stress on the supporting wire reduced, but also mounting of the supporting wire on the helical springs is simplified.

To provide a supporting wire for the helical spring assembly according to the invention which is particularly simple to manufacture and nevertheless ensures reliable support, in a further advantageous embodiment of the helical spring assembly according to the invention the supporting portion is formed of a plastically deformed wire portion of the supporting wire. The supporting wire may also be provided in a basic shape which may for example be helical spring-shaped, U-shaped or clip-shaped, the supporting portion being provided by purposeful plastic deformation of one or more wire portions of the supporting wire. It is preferable in this respect for the supporting portion to be formed of a radially bent portion of the supporting wire. Alternatively or in addition, it is preferred in this embodiment for the supporting portion to be formed of a portion of the supporting wire compressed in such a manner as to change its cross section, although the first variant embodiment is particularly preferred, especially since it is relatively simple to bend the wire portion in a radial direction, while the extent of the wire portion in the longitudinal spring direction may be largely maintained. In addition, unlike cross section-changing compression of the wire portion, radial bending of the wire portion is associated with only a negligible structural change in the supporting wire. Nevertheless, depending on the application, a supporting portion may also be advantageous which is formed of a wire portion compressed in such a manner as to change its cross section.

So that the supporting wire can be arranged in a space-saving manner between the outer and inner helical springs of the helical spring assembly and at the same time optionally rest closely against the respective helical spring, the supporting wire extends along a circular path if the supporting wire is viewed in a longitudinal spring direction. In this case, the at least one supporting portion is offset radially relative to said circular path. An offset relative to said circular path may here be understood to mean both a greater extension of the supporting portion in one of the two radial directions, as may be the case for example with a wire portion compressed in such a manner as to change its cross section, and departure from said circular path by the supporting portion, as may be the case for example with a radially bent wire portion, the latter variant embodiment being preferred, as already indicated above.

In a further preferred embodiment of the helical spring assembly according to the invention, the at least one end portion of the supporting wire extends along the circular path, in order to be advantageously conformed to the respective helical spring and in order to be able to be arranged for example in a space-saving manner in the space between the mutually adjacent turns of the associated helical spring. It may also be ensured thereby that the end portion may be arranged over its entire length in a circumferential spring direction within the space between the mutually adjacent turns.

In principle, other portions of the supporting wire apart from the supporting portions could also be arranged not or not fully within the space between the successive turns of the one helical spring. However, to achieve a particularly compact structure and purposeful or predetermined support in a longitudinal spring direction, in a particularly advantageous embodiment of the helical spring assembly according to the invention only the supporting portion is arranged not or not fully within the space between the successive turns of the one helical spring, while the other portions of the supporting wire are arranged fully within the space between the successive turns of the one helical spring. Consequently, in this embodiment only the supporting portion protrudes beyond the one helical spring in a radial direction, in order to engage between the two successive turns of the other helical spring. In addition to the above-mentioned advantages, this has the further advantage that the supporting wire is arranged particularly securely against the one helical spring.

To hold the supporting wire particularly securely against the helical springs and achieve reliable support in a longitudinal spring direction by way of the end portions of the supporting wire, in a further preferred embodiment of the helical spring assembly according to the invention the end portions of the supporting wire each exhibit an angle of wrap of at least 15°. In this embodiment it is preferable for said angle of wrap to amount to at least 30°, particularly preferably at least 45°, in order further to reinforce the stated advantages of a thus configured end portion.

In principle, the two successive turns of the one helical spring and/or the other helical spring, between which the supporting wire engages, may be spaced from one another in a longitudinal spring direction when the respective helical spring is in the relaxed state, wherein the successive turns may optionally be brought into contact with one another by compression of the helical springs. In a further particularly preferred embodiment of the helical spring assembly according to the invention, however, the two successive turns of the one helical spring and/or the other helical spring between which the supporting wire engages take the form of idle turns. This means that the successive turns rest against one another in a longitudinal spring direction even when the respective helical spring is in the relaxed state. This has the advantage that the space available for engagement of the supporting wire is always the same size in a longitudinal spring direction between the successive turns irrespective of the load status of the helical spring. This embodiment thus ensures particularly reliable positioning during operation of the one helical spring relative to the other helical spring with regard to a longitudinal spring direction, which moreover has a positive effect on the noise generated by the torsional vibration damper.

In a further advantageous embodiment of the helical spring assembly according to the invention, which may be used as an alternative or in addition to the above-described embodiment, the supporting wire engages in such a way between the mutually adjacent turns of the one helical spring and/or the other helical spring that the successive turns of the one helical spring and/or the other helical spring between which the supporting wire engages may be compressed as a block. In this embodiment the successive turns between which the supporting wire engages thus also bring about a restoring force, once said wire has been compressed, which is not the case with the above-mentioned idle turns. However, since in this way the space between the successive turns, which is available for engagement of the supporting wire, may be varied as a function of loading of the respective helical spring, in this embodiment it is preferable for the successive turns of the one helical spring and/or the other helical spring to be compressible as a block, without radially expanding or compressing the one helical spring and/or the other helical spring. In this way, the action of the inner and outer helical springs remains substantially unaffected by the supporting wire, which may be resiliently expanded or compressed or is dimensioned such that it is neither expanded nor compressed during operation.

In order to allow deep engagement of the supporting wire radially into the space between the successive turns of the respective helical spring, whereby on the one hand a particularly compact structure and on the other hand particularly reliable support may be achieved in a longitudinal spring direction, in a further particularly advantageous embodiment of the helical spring assembly according to the invention the cross section of the supporting wire has a cross-sectional shape other than a circle, optionally also other than an oval, which exhibits a cross-sectional width in the longitudinal spring direction which decreases radially inwards and/or outwards. The cross-sectional width in the longitudinal spring direction should in this case decrease in the radial direction in which the supporting wire engages between the successive turns of the respective helical spring. In this respect, it is preferable for the cross section of the supporting wire to have a rectangular, square or diamond-shaped cross-sectional shape. In principle, the degree by which the cross-sectional width decreases could increase in a radial direction. In this embodiment it is preferable, however, for the degree by which the cross-sectional width decreases in the radial direction to be constant or to decrease in the radial direction, especially since in this way on the one hand particularly deep engagement of the supporting wire in the space is ensured and on the other hand the supporting wire fits more closely against the successive turns of the respective helical springs. In the present embodiment it is additionally particularly preferable for the cross-sectional shape to taper to a point in a radial direction, optionally at an angle of at most 90° or at most 75°, to achieve a close fit and deep penetration of the supporting wire. This embodiment is particularly preferable, irrespective of the particular variant, when the spring wire of the inner and/or outer helical spring has a circular cross section.

In a further particularly preferred embodiment of the helical spring assembly according to the invention, the supporting wire is helical. Since the supporting wire is thus conformed to the helical shape of at least one of the two helical springs of the helical spring assembly, the supporting wire may be attached relatively simply to at least one of the inner or outer helical springs, the helical supporting wire being screwed onto or into the respective helical spring. Alternatively or in addition, in this embodiment the supporting wire may be U-shaped, in order to at least partially encompass the inner helical spring. Alternatively or in addition, in this embodiment the supporting wire may be clip-shaped. This should be understood to mean that the supporting wire takes the form of a clip, such that it may be clipped radially from outside onto the inner helical spring. This may also be described as snapping the clip-shaped supporting wire onto the inner helical spring, especially since the therefore resilient supporting wire engages at least in part behind the circumference of the inner helical spring. Irrespective of whether the supporting wire is helical and/or U-shaped and/or clip-shaped, it is preferable in this embodiment for the angle of wrap of the supporting wire to amount to more than 180°, such that the supporting wire may engage behind the circumference of the inner helical spring, so ensuring a secure hold of the supporting wire against the inner helical spring. In this embodiment it is additionally particularly preferable for the stated angle of wrap to amount to more than 360° or more than 720°. This is especially advantageous when the supporting wire is helical in form, and does not need to be clipped laterally onto the inner helical spring in the manner of a clip. Thus, at such a large angle of wrap the helical supporting wire could for example be screwed onto the inner helical spring or into the outer helical spring. In any case, an angle of wrap of more than 360° or more than 720° ensures that the supporting wire is held particularly securely against the respective helical spring. The term helical supporting wire used herein may mean two things. On the one hand, a supporting wire which is not originally helical may be forced resiliently into a helical shape in its installation position between the two helical springs, while on the other hand the supporting wire may already be helical in shape before introduction between the inner and outer helical springs, the latter option being preferred to simplify assembly. A mixture of the two is preferred here.

In a further advantageous embodiment of the helical spring assembly according to the invention, the outer helical spring and the inner helical spring each take the form of bow springs, i.e. they each comprise a bent or curved longitudinal spring axis.

In a further preferred embodiment of the helical spring assembly according to the invention, the outer helical spring and the inner helical spring display opposing directions of winding. This not only allows simplified insertion of the inner helical spring into the interior of the outer helical spring in a longitudinal spring direction, but rather the supporting wire may be pretensioned or tensioned to a certain degree by the opposing directions of winding of the two helical springs, such that the supporting wire may fit closely against the turns of the two helical springs and be pretensioned thereagainst. This is to a certain extent desirable, especially since in this way on the one hand secure supporting wire hold and on the other hand noise suppression during operation are guaranteed.

The method according to the invention serves in production of a supporting wire for the helical spring assembly according to the invention. In this respect, the method comprises the method steps stated below. First of all, a wire is provided. This wire preferably comprises a steel wire. The wire in this case comprises two end portions. Two further method steps then follow, which may be performed in succession, the order initially being immaterial, or in parallel. The one method step consists in shaping the wire into a helical and/or U-shaped and/or clip-shaped supporting wire. The other method step consists in plastic deformation of at least one wire portion between the end portions, so creating a laterally protruding supporting portion. The supporting portion should in this case preferably be plastically deformed in such a way that it protrudes radially inwards or outwards from the finished supporting wire. Plastic deformation preferably takes the form of radial bending or compression or squeezing of the stated wire portion in a manner so as to change its cross section. The particular advantage of the method according to the invention consists in the fact that the supporting element for the helical spring assembly or the supporting wire may be particularly simply produced, wherein substantially the same devices and methods may be used for this purpose as may also be used to produce the helical springs themselves.

In a preferred embodiment of the method according to the invention, the wire is shaped in such a way into a helical and/or U-shaped and/or clip-shaped supporting wire that the resultant supporting wire extends along a circular path when viewed in a longitudinal spring direction, wherein the two end portions extend particularly preferably along the circular path. In this embodiment it is additionally particularly preferable for the supporting portion produced by the plastic deformation of the wire portion to be offset radially inwards or outwards relative to the circular path.

With regard to further embodiments of the method according to the invention, reference should be made to the above-described embodiments of the supporting wire in the helical spring assemblies, the features of which may also be applied mutatis mutandis to the method according to the invention.

The invention is explained in greater detail below on the basis of exemplary embodiments with reference to the attached drawings, in which:
Fig. 1 shows a schematic representation of one embodiment of the helical spring assembly according to the invention viewed in a longitudinal spring direction,
Fig. 2 is a cross-sectional view of the helical spring assembly of fig. 1 along section line A-A,
Fig. 3 is a cross-sectional view of the helical spring assembly of fig. 1 along section line B-B,
Fig. 4 shows a perspective representation of the supporting wire of figs. 1 to 3 on its own,
Fig. 5 shows the portion C of fig. 2 with an alternative variant configuration of the supporting wire and
Fig. 6 shows the portion C of fig. 2 with a further alternative variant configuration of the supporting wire.

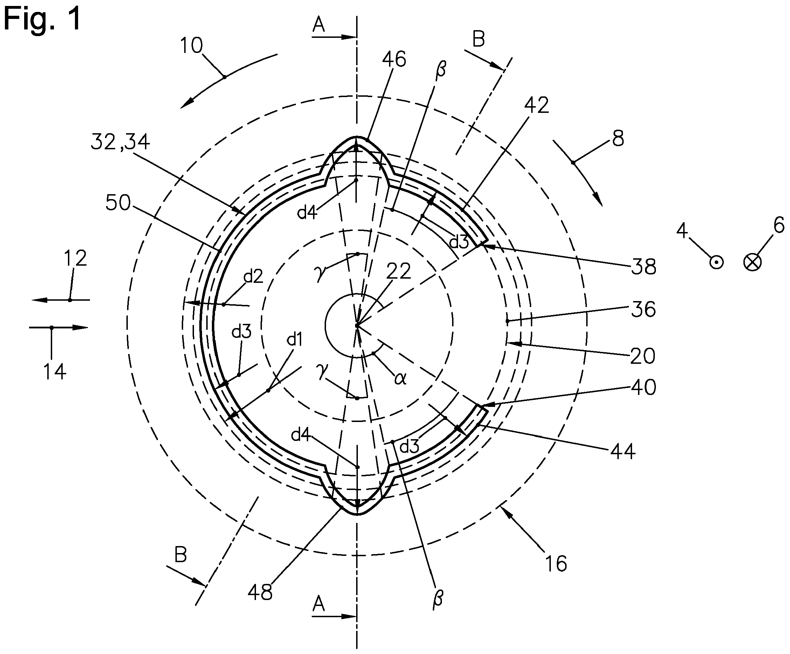

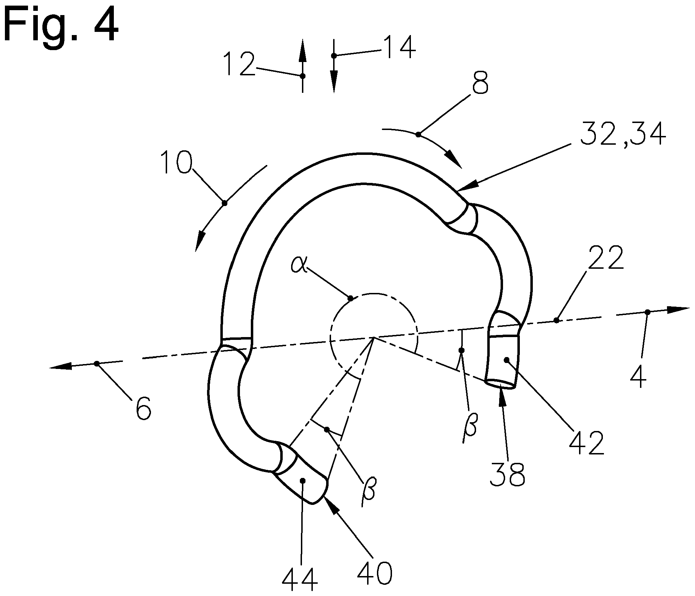

Figs. 1 to 3 show one embodiment of the helical spring assembly 2 according to the invention, with fig. 4 being a perspective representation of the supporting wire of figs. 1 to 3 on its own. In the figures the opposing longitudinal spring directions 4, 6, the opposing circumferential spring directions 8, 10 and the opposing radial directions 12, 14 of the helical springs, described in greater detail below, of the helical spring assembly 2 are indicated by corresponding arrows. The helical spring assembly 2 is arranged in a torsional vibration damper, not described in any greater detail, in such a way that the helical spring assembly 2 extends in a longitudinal spring direction 4, 6 between the driving element of the input side of the torsional vibration damper on the one hand and a driving element of the output side of the torsional vibration damper on the other hand and here effects rotary vibration damping. The helical spring assembly 2 is in this case designed so as to effect two-stage damping, which in the present example is to be achieved by making the inner helical spring shorter than the outer helical spring.

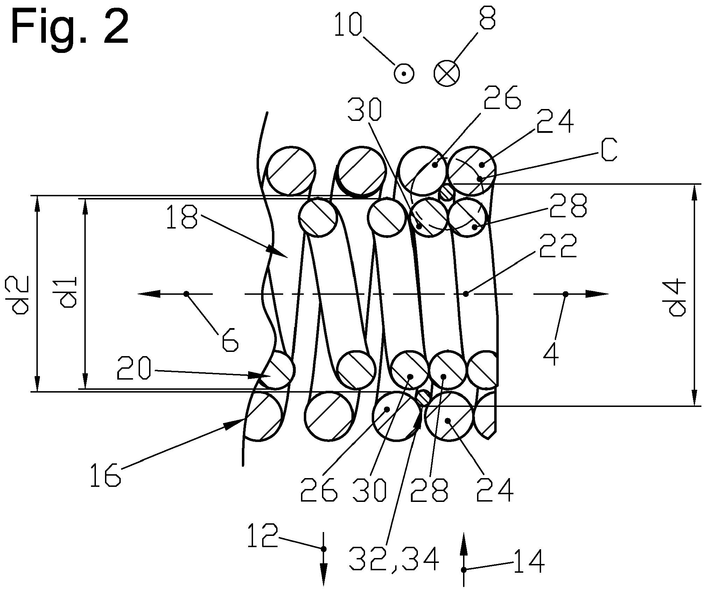

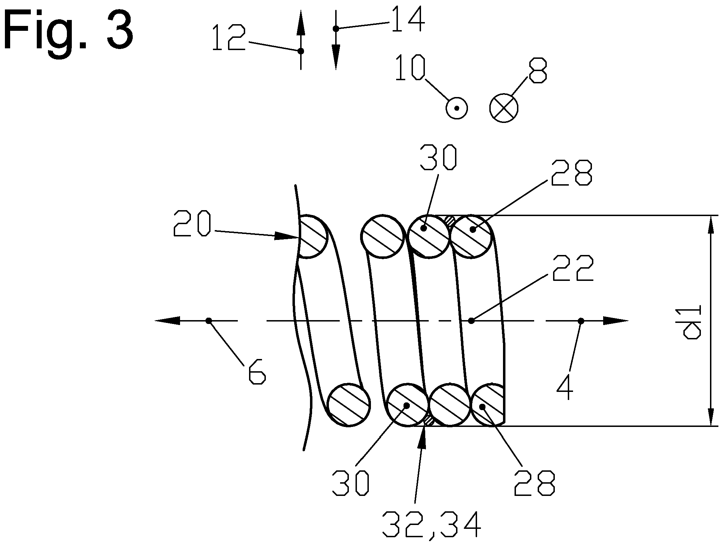

As already indicated above, the helical spring assembly 2 comprises an outer helical spring 16, whose turns surround a spring interior 18, and an inner helical spring 20, which is arranged in the spring interior 18 of the outer helical spring 16. The two helical springs 16, 20 are arranged coaxially, such that they have a common longitudinal spring axis 22. Both helical springs 16, 20 additionally take the form of "bow springs", i.e. they comprise a curved or bent longitudinal spring axis 22, wherein in the figures the helical springs 16, 20 are shown as straight helical springs with a straight longitudinal spring axis 22, to make the illustration clearer. However, it should be pointed out at this point that the two helical springs 16, 20 may actually take the form of straight helical springs with a straight longitudinal spring axis 22. As is apparent in particular from fig. 2, the two helical springs 16 and 20 additionally have opposing directions of winding. In other words, the outer helical spring 16 is wound in the opposite direction from the inner helical spring 20. It is also apparent from fig. 2 that the outer helical spring 16 has at least two idle turns 24, 26, which consequently rest against one another in a longitudinal spring direction 4, 6 even in the relaxed state of the outer helical spring 16 shown in fig. 2. Accordingly, the inner helical spring 20 also comprises at least two idle turns 28, 30, as is clear from fig. 3. Consequently, the idle turns 28, 30 also rest against one another in a longitudinal spring direction 4, 6 even when the inner helical spring 20 is in the relaxed state. Since the turns 24, 26 and 28, 30 each succeed one another in a longitudinal spring direction 4, 6, they are also designated hereinafter as successive turns 24, 26 and 28, 30.

To support the helical springs 16, 20 against one another in a longitudinal spring direction 4, 6, a supporting element 32 is provided, by means of which the inner helical spring 20 may be supported or is supported against the outer helical spring 16 in the longitudinal spring direction 4, 6. The supporting element 32 here takes the form of a supporting wire 34 at least partially encompassing the inner helical spring 20 in a circumferential spring direction 8, 10. The supporting wire 34 is preferably a steel wire, wherein the more precise structure of the supporting wire 34 will be examined in greater detail later. In any case, the supporting wire 34 is shaped such that it engages on the one hand in the radial direction 14 between the successive idle turns 28, 30 of the inner helical spring 20, as indicated in figs. 1 and 3, and on the other hand engages in the radial direction 12 between the two successive idle turns 24, 26 of the outer helical spring 16, as is revealed in particular by figs. 1 and 2. The turns of the outer and inner helical springs 16, 20 extend along a circular path when viewed in a longitudinal spring direction 4, 6. Thus, the inner helical spring 20 has an external turn diameter d₁, while the turns of the outer helical spring 16 have an internal turn diameter d₂, which is slightly greater than the external turn diameter d₁.

Accordingly, the supporting wire 34 also extends along a circular path 36, when viewed in a longitudinal spring direction 4, 6, the circular path 36 being indicated by broken lines in fig. 1. The supporting wire 34 is here not just U-shaped or clip-shaped, as revealed by figs. 1 and 4, but rather the supporting wire 34 is also of helical construction, i.e. like a helical spring the supporting wire 34 displays a turn pitch in a longitudinal spring direction 4, 6, wherein the direction of winding of the supporting wire 34 corresponds to the direction of winding of at least one of the two helical springs 16, 20. In the present example the direction of winding of the supporting wire 34 corresponds to the direction of winding of the inner helical spring 20. Thanks to the clip-shaped structure, the supporting wire 34 may be slipped or clipped laterally, i.e. in the radial direction 14, from outside onto the inner helical spring 20, in order to achieve a snap connection between the resilient supporting wire 34 and the inner helical spring 20. To ensure this, the supporting wire 34 has an angle of wrap α which is greater than 180°, but less than 360°. Although this is not shown, the angle of wrap α may however also be more than 360°, preferably more than 720°, although it is preferable in such cases for the supporting wire 34 to be screwed in the longitudinal spring direction 6 onto the inner helical spring 20 or into the outer helical spring 16.

The supporting wire 34 comprises two free ends 38, 40, which each adjoin an end portion 42, 44 of the supporting wire 34. It could also be said that the free end of the end portion 42, 44 forms the free end 38, 40 of the supporting wire 34. As is apparent from fig. 1, the two end portions 42, 44 extend along the above-mentioned circular path 36. The angle of wrap β of the two end portions 42, 44 here amounts in each case to at least 15°, preferably at least 30°, particularly preferably at least 45°. The external diameter of the supporting wire 34 in the region of the end portions 42, 44 is indicated in fig. 1 by way of reference numeral d₃. As is apparent from fig. 1, the external diameter d₃ is smaller than the internal turn diameter d₂ at least of the successive idle turns 24, 26 of the outer helical spring 16. In other words, the end portions 42, 44 are constructed such that they each engage between the successive idle turns 28, 30 of the inner helical spring 20, but not between the successive idle turns 24, 26 of the outer helical spring 16.

Furthermore, in the embodiment illustrated the external diameter d₃ of the supporting wire 34 extending along the circular path 36 is less than or equal to the external turn diameter d₁ at least of the successive idle turns 28, 30 of the inner helical spring 20, as is revealed in particular in figs. 1 and 3. In other words, the two end portions 42, 44 are accommodated fully in the space between the successive idle turns 28, 30 of the inner helical spring 20, without protruding outwards in the radial direction 12 beyond the external turn diameter d₁ of the inner helical spring 20.

In order, despite the above-described construction or size of the end portions 42, 44, to allow support against the outer helical spring 16 in a longitudinal spring direction 4, 6 by means of the supporting wire 34, said supporting wire 34 comprises two supporting portions 46, 48 arranged in the circumferential spring directions 8, 10 between the end portions 42, 44 and protruding outwards in the radial direction 12. In this way the supporting portion 46 adjoins the end portion 42 in the circumferential spring direction 10, while the supporting portion 48 adjoins the end portion 44 in the circumferential spring direction 8. The two supporting portions 46, 48 extend outwards to such an extent in the radial direction 12 that they engage in the radial direction 12 between the successive idle turns 24, 26. To this end, the external diameter d₄ of the supporting wire 34 in the region of the supporting portions 46, 48 is greater than the internal turn diameter d₂ at least of the successive idle turns 24, 26 of the outer helical spring 16. As is also apparent from fig. 1, the two supporting portions 46, 48 are additionally offset by 180° relative to one another in a circumferential spring direction 8, 10. Should more than two supporting portions 46 be provided, it is in principle advantageous to arrange them offset uniformly relative to one another in a circumferential spring direction 8, 10.

In the circumferential spring direction 10 the supporting portion 46 is adjoined by an intermediate portion 50 of the supporting wire 34, which extends along the circular path 36 as far as the supporting portion 48. In the region of the intermediate portion 50 the supporting wire 34 again has the external diameter d₃, as in the region of the end portions 42, 44, such that the intermediate portion 50 is also arranged fully within the space between the successive idle turns 28, 30 of the inner helical spring 20. Thus in the present embodiment only the supporting portions 46, 48 are offset in the radial direction 12 relative to the circular path 36, wherein only the supporting portions 46, 48 are not arranged or not fully arranged within the space between the successive idle turns 28, 30 of the inner helical spring 20. The supporting wire 34 therefore engages only with the two supporting portions 46, 48 between the successive idle turns 24, 26 of the outer helical spring 16. To bring about advantageous support in a longitudinal spring direction 4, 6, the supporting portions 46, 48 each engage between the successive idle turns 24, 26 of the outer helical spring 16 over an angle of wrap γ, which amounts to at least 10°, it being preferable for the angle of wrap γ to amount to at least 20°, particularly preferably at least 40°. In this connection it has additionally proved advantageous for the stated angle of wrap γ to amount to no more than 75°, this restriction being advantageous in particular when the direction of winding of the outer helical spring 16 is the opposite of the direction of winding of the inner helical spring 20.

The supporting portions 46, 48 are each formed of a plastically deformed wire portion of the supporting wire 34. In the embodiment according to figs. 1 to 4, the plastically deformed wire portion is formed of a wire portion bent outwards in the radial direction 12, which portion, as is apparent from fig. 1, is offset at least in part relative to the circular path 36 in the embodiment illustrated.

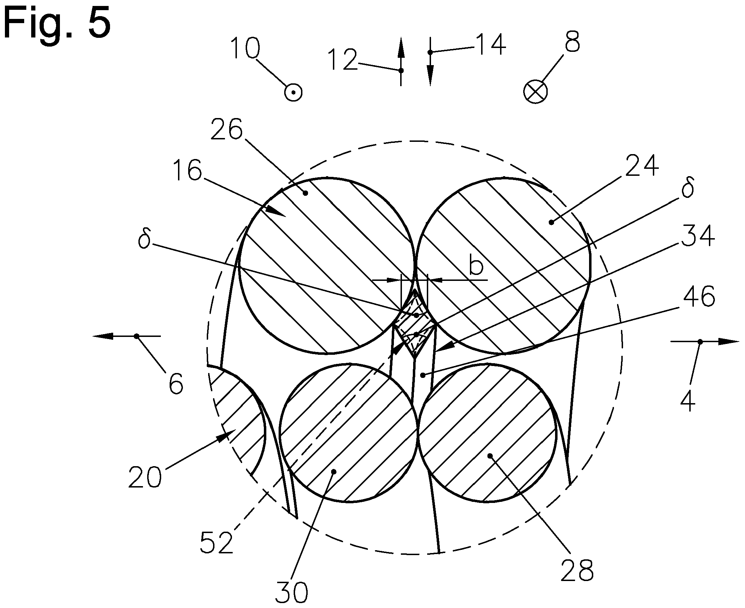

A second embodiment of the helical spring assembly 2 according to the invention will be described below with reference to fig. 5, said second embodiment corresponding substantially to the first embodiment according to figs. 1 to 4, such that only the differences are addressed below, the same reference signs are used for identical or similar parts and the preceding description otherwise accordingly applies. Fig. 5 shows the portion C of fig. 2 on an enlarged scale.

While in figs. 1 to 4 of the first embodiment a supporting wire 34 is used which has a circular cross-sectional shape, the wire cross section of the supporting wire 34 in the second embodiment has a cross-sectional shape other than a circle, preferably also other than an oval. In the present example the cross-sectional shape is diamond-shaped, but it may also be rectangular or square. The cross-sectional shape has a cross-sectional width in a longitudinal spring direction 4, 6 indicated in fig. 5 with the reference sign b. Due to the diamond shape of the cross section of the supporting wire 34, the cross-sectional width b of the cross section of the supporting wire 34 decreases both outwards in radial direction 12 and inwards in radial direction 14. The degree by which the cross-sectional width b decreases in the radial direction is constant. Alternatively, however, the degree by which the cross-sectional width b decreases could also decrease in the radial direction 12 and/or 14, wherein the cross section of the supporting wire 34 could in this case for example display the curved sides 52 indicated by broken lines in fig. 5. Irrespective of this, it is additionally preferable for the cross-sectional shape to taper to a point in the radial direction 12 and/or 14, wherein the cross-sectional shape should then particularly preferably taper at an angle δ of at most 90° or at most 75° in the radial direction 12, 14.

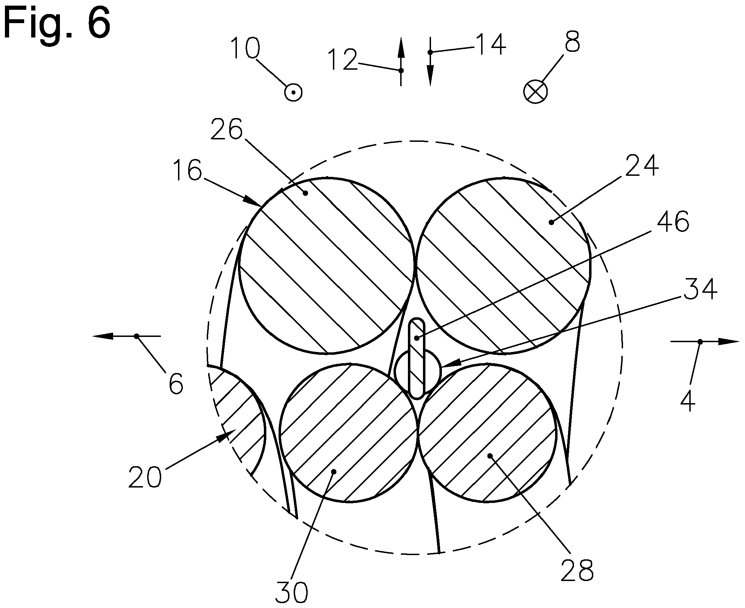

A third embodiment of the helical spring assembly 2 according to the invention will be described below with reference to fig. 6, said second embodiment corresponding substantially to the embodiments according to figs. 1 to 4, such that only the differences are addressed below, the same reference signs are used for identical or similar parts and the preceding description of figs. 1 to 4 accordingly applies. Fig. 6 shows the portion C of fig. 2 on an enlarged scale.

As already mentioned above with reference to figs. 1 to 4, in the first embodiment of the helical spring assembly 2 according to the invention the supporting portions 46, 48 are formed by a wire portion of the supporting wire 34 bent in the radial direction 12. In contrast to this, in the third embodiment according to fig. 6 both or at least one of the supporting portions 46, 48 is/are formed of a wire portion of the supporting wire 34 compressed or squeezed in such a manner as to change its cross section. In this way, the cross section of the supporting wire 34 is expanded or offset outwards in the radial direction 12 in the region of the supporting portions 46, 48, in order to engage in the radial direction 12 between the successive idle turns 24, 26 of the outer helical spring 16. As is apparent from fig. 6, the supporting portion 46, 48 does not thereby have to be fully offset outwards in the radial direction 12 relative to the circular path 36, but rather a part of the supporting portion 46, 48 may also remain in the space between the successive idle turns 28, 30 of the inner helical spring 20.

In the three above-described embodiments of the helical spring assembly 2 according to the invention, the supporting wire 34 in each case engages between successive idle turns of the outer and inner helical springs 16, 20. Although this is not shown in figs. 1 to 6, these successive turns 24, 26, 28, 30 of the outer helical spring 16 and/or of the inner helical spring 20 may be compressible as a block, i.e. the stated turns 24, 26, 28, 30 do not have to take the form of idle turns. In this alternative embodiment, the successive turns 24, 26 and/or 28, 30, between which the supporting wire 34 engages in the radial directions 12 or 14 respectively, would thus also bring about a restoring force, such that the stated turns are not wasted with regard to damping. Since in this way, however, the space between the successive turns 24, 26 or 28, 30 which is available for engagement of the supporting wire 34 may be changed as a function of the loading of the respective helical spring 16, 20, in this alternative embodiment it is additionally preferable for the successive turns 24, 26, 28, 30 of the inner helical spring 20 and/or the outer helical spring 16 to be compressible as a block, without expanding the inner helical spring 20 and/or the outer helical spring 16 in radial direction 12 or compressing it/them in radial direction 14. In this way the action of the inner and outer helical springs 20, 16 remains substantially unaffected by the presence of the supporting wire 34, which may preferably be resiliently expanded or compressed or indeed dimensioned in such a way that during operation it is neither expanded in radial direction 12 nor compressed in radial direction 14. To this end, the supporting wire 34 may for example be dimensioned as indicated in figs. 1 to 6.

To produce the above-mentioned supporting element 32 in the form of supporting wire 34, it is for example possible to proceed as follows. First of all, a wire, preferably a steel wire, with two end portions is provided. Then the wire is shaped into a helical and/or U-shaped and/or clip-shaped supporting wire, wherein the wire is deformed plastically before, during or after said shaping at a wire portion between the end portions, so producing a protruding supporting portion. During shaping of the wire it is preferable for said wire to be shaped in such a way that it extends along the above-described circular path 36, wherein said shaping should make the end portions 42, 44 in particular extend along the circular path 36. Plastic deformation of the wire portion with production of the protruding supporting portions 46, 48 preferably proceeds through bending of the wire portion outwards in radial direction 12 or inwards in radial direction 14, depending on whether the supporting portions 46, 48 are intended to engage in the turn spaces of the outer helical spring 16 or the inner helical spring 20. Alternatively, plastic deformation may be performed by cross section-changing compression or squeezing of the wire portion, so producing the supporting portions 46, 48. In this embodiment it is additionally preferable for the supporting portion 46, 48 to be offset relative to the circular path 36 in radial direction 12 or 14 respectively by the plastic deformation.

### List of reference signs

- 2: Helical spring assembly
- 4: Longitudinal spring direction
- 6: Longitudinal spring direction
- 8: Circumferential spring direction
- 10: Circumferential spring direction
- 12: Radial direction
- 14: Radial direction
- 16: Outer helical spring
- 18: Spring interior
- 20: Inner helical spring
- 22: Longitudinal spring axis
- 24: Idle turn
- 26: Idle turn
- 28: Idle turn
- 30: Idle turn
- 32: Supporting element
- 34: Supporting wire
- 36: Circular path
- 38: Free end
- 40: Free end
- 42: End portion
- 44: End portion
- 46: Supporting portion
- 48: Supporting portion
- 50: Intermediate portion
- 52: Curved side

- α: Angle of wrap
- b: Cross-sectional width
- β: Angle of wrap
- C: Portion
- γ: Angle of wrap
- δ: Angle
- d₁: External turn diameter
- d₂: Internal turn diameter
- d₃: External diameter
- d₄: External diameter

## Claims

1. A helical spring assembly (2) for a torsional vibration damper with an outer helical spring (16) and an inner helical spring (20), which is arranged in the interior (18) of the outer helical spring (16) and is supported against the outer helical spring (16) in a longitudinal spring direction (4, 6) by means of a supporting element (32), the supporting element (32) being a supporting wire (34) at least partially encompassing the inner helical spring (20), which supporting wire engages on the one hand between two successive turns (28, 30) of the one helical spring (20) and on the other hand between two successive turns (24, 26) of the other helical spring (16), the supporting wire (34) comprising two end portions (42, 44), **characterized in that** the supporting wire (34) comprises at least one supporting portion (46, 48) arranged between the end portions (42, 44) of the supporting wire (34) and protruding in a radial direction (12, 14), said supporting portion engaging between two successive turns (28, 30) of the other helical spring (16).

2. The helical spring assembly (2) as claimed in claim 1, **characterized in that** at least one of the two end portions (42, 44) engages between the successive turns (28, 30) of the one helical spring (20), optionally the inner helical spring (20), but not between the successive turns (24, 26) of the other helical spring (16), the at least one end portion (42, 44) preferably being fully accommodated in the space between the successive turns (28, 30) of the one helical spring (20).

3. The helical spring assembly (2) as claimed in one of claims 1 to 2, **characterized in that** said supporting portion engages between the successive turns (28, 30) of the outer helical spring (16) or/and at least two supporting portions (46, 48) are provided, which are preferably offset by 180° relative to one another in a circumferential spring direction (8, 10).

4. The helical spring assembly (2) as claimed in one of claims 1 to 3, **characterized in that** the supporting wire (34) engages solely with the at least one supporting portion (46, 48) between the successive turns (24, 26) of the other helical spring (16) and/or the supporting portion (46, 48) engages between the successive turns (24, 26) of the other helical spring (16) over an angle of wrap (γ) amounting to at least 10°, preferably at least 20°, particularly preferably at least 40°, optionally no more than 75°.

5. The helical spring assembly (2) as claimed in one of claims 1 to 4, **characterized in that** the supporting portion (46, 48) is formed of a plastically deformed wire portion, preferably of a wire portion bent in a radial direction (12, 14) and/or of a wire portion compressed in such a way as to change its cross section, of the supporting wire (34).

6. The helical spring assembly (2) as claimed in one of claims 1 to 5, **characterized in that** the supporting wire (34) extends along a circular path (36), when viewed in a longitudinal spring direction (4, 6), the supporting portion (46, 48) being offset relative to said circular path (36) in a radial direction (12, 14) and the at least one end portion (42, 44) of the supporting wire (34) preferably extending along the circular path (36) and particularly preferably only the supporting portion (46, 48) not being arranged or not fully arranged within the space between the successive turns (28, 30) of the one helical spring (20).

7. The helical spring assembly (2) as claimed in one of claims 1 to 6, **characterized in that** the end portions (42, 44) each display an angle of wrap (β) of at least 15°, preferably at least 30°, particularly preferably at least 45°.

8. The helical spring assembly (2) as claimed in one of the preceding claims, **characterized in that** the two successive turns (28, 30; 24, 26) of the one helical spring (20) and/or the other helical spring (16), between which the supporting wire (34) engages take the form of idle turns and/or the supporting wire (34) engages in such a way between the mutually adjacent turns (28, 30; 24, 26) of the one helical spring (20) and/or the other helical spring (16) that the successive turns (28, 30, 24, 26) of the one helical spring (20) and/or the other helical spring (16) may be compressed as a block, preferably without expanding or compressing the one helical spring (20) and/or the other helical spring (16) in a radial direction (12, 14).

9. The helical spring assembly (2) according to one of the preceding claims, **characterized in that** the wire cross section of the supporting wire (34) has a cross-sectional shape other than a circle, optionally also other than an oval, optionally a rectangular, square or diamond-shaped cross-sectional shape, which has a cross-sectional width (b) in a longitudinal spring direction (4, 6) which decreases inwards and/or outwards in a radial direction (12, 14), the degree by which the cross-sectional width (b) decreases preferably being constant or decreasing in the radial direction (12, 14) and the cross-sectional shape particularly preferably tapering to a point in the radial direction (12, 14), optionally at an angle (δ) of at most 90° or at most 75°.

10. The helical spring assembly (2) as claimed in one of the preceding claims, **characterized in that** the supporting wire (34) is helical and/or U-shaped and/or clip-shaped, preferably with an angle of wrap (α) of more than 180°, particularly preferably more than 360° or more than 720°.

11. The helical spring assembly (2) according to one of the preceding claims, **characterized in that** the outer helical spring (16) and the inner helical spring (20) each take the form of bow springs and/or display opposing directions of winding.

12. A method for producing a supporting wire (34) for a helical spring assembly (2) as claimed in one of the preceding claims, having the method steps:
providing a wire with two end portions (42, 44),
shaping the wire into a helical and/or U-shaped and/or clip-shaped supporting wire (34), which extends preferably along a circular path (36) when viewed in a longitudinal spring direction (4, 6), the end portions (42, 44) extending particularly preferably along the circular path (36),
plastically deforming, preferably bending in a radial direction (12, 14) or
compressing in such a manner as to change its cross section, at least one wire portion between the end portions (42, 44), so producing a supporting portion (46, 48) protruding in the radial direction (12, 14), which is preferably offset in the radial direction (12, 14) relative to the circular path (36).

## Patentansprüche

1. Schraubenfederanordnung (2) für einen Torsionsschwingungsdämpfer mit einer äußeren Schraubenfeder (16) und einer inneren Schraubenfeder (20), die im Innenbereich (18) der äußeren Schraubenfeder (16) angeordnet und mittels eines Halteelements (32) in einer Federlängsrichtung (4, 6) gegen die äußere Schraubenfeder (16) gehalten ist, wobei das Halteelement (32) ein Halteseil (34) ist, das die innere Schraubenfeder (20) wenigstens zum Teil umgibt, wobei das Halteseil einerseits zwischen zwei aufeinander folgenden Windungen (28, 30) der einen Schraubenfeder (20) und andererseits zwischen zwei aufeinander folgenden Windungen (24, 26) der anderen Schraubenfeder (16) eingreift, wobei das Halteseil (34) zwei Endabschnitte (42, 44) umfasst,
**dadurch gekennzeichnet, dass** das Halteseil (34) wenigstens einen Halteabschnitt (46, 48) umfasst, der zwischen den Endabschnitten (42, 44) des Halteseils (34) angeordnet ist und in einer radialen Richtung (12, 14) vorsteht, wobei der Halteabschnitt zwischen zwei aufeinander folgenden Windungen (28, 30) der anderen Schraubenfeder (16) eingreift.

2. Schraubenfederanordnung (2) nach Anspruch 1,
**dadurch gekennzeichnet, dass** wenigstens einer der zwei Endabschnitte (42, 44) zwischen den aufeinander folgenden Windungen (28, 30) der einen Schraubenfeder (20), optional der inneren Schraubenfeder (20), jedoch nicht zwischen den aufeinander folgenden Windungen (24, 26) der anderen Schraubenfeder (16) eingreift, wobei der wenigstens eine Endabschnitt (42, 44) vorzugsweise vollständig in dem Raum zwischen den aufeinander folgenden Windungen (28, 30) der einen Schraubenfeder (20) untergebracht ist.

3. Schraubenfederanordnung (2) nach einem der Ansprüche 1 bis 2,
**dadurch gekennzeichnet, dass** der Halteabschnitt zwischen den aufeinander folgenden Windungen (28, 30) der äußeren Schraubenfeder (16) eingreift und/oder wenigstens zwei Halteabschnitte (46, 48) vorgesehen sind, die vorzugsweise um 180° relativ zueinander in einer Federumfangsrichtung (8, 10) versetzt sind.

4. Schraubenfederanordnung (2) nach einem der Ansprüche 1 bis 3,
**dadurch gekennzeichnet, dass** das Halteseil (34) zwischen den aufeinander folgenden Windungen (24, 26) der anderen Schraubenfeder (16) ausschließlich mit dem wenigstens einen Halteabschnitt (46, 48) eingreift und/ oder der Halteabschnitt (46, 48) zwischen den aufeinander folgenden Windungen (24, 26) der anderen Schraubenfeder (16) über einen Umschlingungswinkel (γ) eingreift, der wenigstens 10°, vorzugsweise wenigstens 20°, besonders bevorzugt wenigstens 40°, optional höchstens 75° beträgt.

5. Schraubenfederanordnung (2) nach einem der Ansprüche 1 bis 4,
**dadurch gekennzeichnet, dass** der Halteabschnitt (46, 48) aus einem plastisch verformten Seilabschnitt des Halteseils (34), vorzugsweise aus einem in einer radialen Richtung (12, 14) gebogenen Seilabschnitt und/oder aus einem Seilabschnitt ausgebildet ist, der auf eine solche Weise zusammengedrückt ist, dass sich sein Querschnitt ändert.

6. Schraubenfederanordnung (2) nach einem der Ansprüche 1 bis 5,
**dadurch gekennzeichnet, dass** sich das Halteseil (34) in einer Federlängsrichtung (4, 6) gesehen entlang einem kreisförmigen Weg (36) erstreckt, wobei der Halteabschnitt (46, 48) relativ zu dem kreisförmigen Weg (36) in einer radialen Richtung (12, 14) versetzt ist und sich der wenigstens eine Endabschnitt (42, 44) des Halteseils (34) vorzugsweise entlang dem kreisförmigen Weg (36) erstreckt und besonders bevorzugt nur der Halteabschnitt (46, 48) nicht oder nicht vollständig in dem Raum zwischen den aufeinander folgenden Windungen (28, 30) der einen Schraubenfeder (20) angeordnet ist.

7. Schraubenfederanordnung (2) nach einem der Ansprüche 1 bis 6,
**dadurch gekennzeichnet, dass** die Endabschnitte (42, 44) jeweils einen Umschlingungswinkel (β) von wenigstens 15°, vorzugsweise von wenigstens 30°, besonders bevorzugt von wenigstens 45° aufweisen.

8. Schraubenfederanordnung (2) nach einem der vorhergehenden Ansprüche,
**dadurch gekennzeichnet, dass** die zwei aufeinander folgenden Windungen (28, 30; 24, 26) der einen Schraubenfeder (20) und/oder der anderen Schraubenfeder (16), zwischen denen das Halteseil (34) eingreift, die Form von ungenutzten Windungen annehmen und/oder das Halteseil (34) auf eine solche Weise zwischen zwei gegenseitig angrenzenden Windungen (28, 30; 24, 26) der einen Schraubenfeder (20) und/oder der anderen Schraubenfeder (16) eingreift, dass die aufeinander folgenden Windungen (28, 30, 24, 26) der einen Schraubenfeder (20) und/oder der anderen Schraubenfeder (16) als Block zusammengedrückt werden können, vorzugsweise ohne die eine Schraubenfeder (20) und/oder die andere Schraubenfeder (16) in einer radialen Richtung (12, 14) auszudehnen und zusammenzudrücken.

9. Schraubenfederanordnung (2) nach einem der vorhergehenden Ansprüche,
**dadurch gekennzeichnet, dass** der Seilquerschnitt des Halteseils (34) eine andere Querschnittsform als ein Kreis, optional auch eine andere Querschnittsform als ein Oval, optional eine rechteckige, quadratische oder rautenförmige Querschnittsform aufweist, die in einer Federlängsrichtung (4, 6) eine Querschnittsbreite (b) aufweist, die sich in einer radialen Richtung (12, 14) nach innen und/oder nach außen verringert, wobei der Grad, um den sich die Querschnittsbreite (b) verringert, vorzugsweise konstant ist oder sich in der radialen Richtung (12, 14) verringert und wobei sich die Querschnittsform besonders bevorzugt zu einem Punkt in der radialen Richtung (12, 14) verjüngt, optional mit einem Winkel (δ) von höchstens 90° oder höchstens 75°.

10. Schraubenfederanordnung (2) nach einem der vorhergehenden Ansprüche,
**dadurch gekennzeichnet, dass** das Halteseil (34) spiralförmig und/oder U-förmig und/oder klemmenförmig ist, vorzugsweise mit einem Umschlingungswinkel (α) von über 180°, besonders bevorzugt von über 360° oder von über 720°.

11. Schraubenfederanordnung (2) nach einem der vorhergehenden Ansprüche,
**dadurch gekennzeichnet, dass** die äußere Schraubenfeder (16) und die innere Schraubenfeder (20) jeweils die Form von Bogenfedern annehmen und/oder entgegengesetzte Windungsrichtungen aufweisen.

12. Verfahren zur Herstellung eines Halteseils (34) für eine Schraubenfederanordnung (2) nach einem der vorhergehenden Ansprüche, das folgende Verfahrensschritte aufweist:
Bereitstellen eines Seils mit zwei Endabschnitten (42, 44),
Formen des Seils in ein spiralförmiges und/oder U-förmiges und/oder klemmenförmiges Halteseil (34), das sich in einer Federlängsrichtung (4, 6) gesehen vorzugsweise entlang einem kreisförmigen Weg (36) erstreckt, wobei sich die Endabschnitte (42, 44) besonders bevorzugt entlang dem kreisförmigen Weg (36) erstrecken,
plastisches Verformen, vorzugsweise Biegen in einer radialen Richtung (12, 14) oder Zusammendrücken wenigstens eines Seilabschnitts zwischen den Endabschnitten (42, 44) auf eine solche Weise, dass sich sein Querschnitt ändert, und somit Herstellen eines Halteabschnitts (46, 48), der in die radiale Richtung (12, 14) vorsteht und vorzugsweise in der radialen Richtung (12, 14) relativ zu dem kreisförmigen Weg (36) versetzt ist.

## Revendications

1. Ensemble ressort hélicoïdal (2) destiné à un amortisseur de vibrations de torsion doté d'un ressort hélicoïdal extérieur (16) et d'un ressort hélicoïdal intérieur (20), qui est agencé dans l'intérieur (18) du ressort hélicoïdal extérieur (16) et qui est supporté contre le ressort hélicoïdal extérieur (16) dans une direction longitudinale de ressort (4, 6) au moyen d'un élément de support (32), l'élément de support (32) étant un fil de support (34) englobant au moins partiellement le ressort hélicoïdal intérieur (20), ledit fil de support se logeant, d'une part, entre deux spires successives (28, 30) du premier ressort hélicoïdal (20) et, d'autre part, entre deux spires successives (24, 26) de l'autre ressort hélicoïdal (16), le fil de support (34) comprenant deux parties d'extrémité (42, 44), **caractérisé en ce que** le fil de support (34) comprend au moins une partie support (46, 48) disposée entre les parties d'extrémité (42, 44) du fil de support (34) et faisant saillie dans une direction radiale (12, 14), ladite partie support se logeant entre deux spires successives (28, 30) de l'autre ressort hélicoïdal (16).

2. Ensemble ressort hélicoïdal (2) selon la revendication 1, **caractérisé en ce qu'**au moins l'une des deux parties d'extrémité (42, 44) se loge entre les spires successives (28, 30) d'un ressort hélicoïdal (20), éventuellement le ressort hélicoïdal intérieur (20), mais pas entre les spires successives (24, 26) de l'autre ressort hélicoïdal (16), l'au moins une partie d'extrémité (42, 44) étant de préférence entièrement logée dans l'intervalle entre les spires successives (28, 30) du premier ressort hélicoïdal (20) .

3. Ensemble ressort hélicoïdal (2) selon l'une des revendications 1 à 2, **caractérisé en ce que** la partie support se loge entre les spires successives (28, 30) du ressort hélicoïdal extérieur (16) et/ou au moins deux parties de support (46, 48) sont prévues, de préférence décalées de 180° l'une par rapport à l'autre dans une direction périphérique (8, 10) de ressort.

4. Ensemble ressort hélicoïdal (2) selon l'une des revendications 1 à 3, **caractérisé en ce que** le fil de support (34) se loge uniquement avec l'au moins une partie support (46, 48) entre les spires successives (24, 26) de l'autre ressort hélicoïdal (16) et/ou la partie support (46, 48) se loge entre les spires successives (24, 26) de l'autre ressort hélicoïdal (16) sur un angle d'enroulement (γ) d'au moins 10°, de préférence d'au moins 20°, idéalement d'au moins 40°, et éventuellement de 75° au maximum.

5. Ensemble ressort hélicoïdal (2) selon l'une des revendications 1 à 4, **caractérisé en ce que** la partie support (46, 48) est formée d'une partie de fil déformée plastiquement, de préférence d'une partie de fil pliée dans une direction radiale (12, 14) et/ou d'une partie de fil comprimée de manière à modifier sa section transversale, du fil de support (34).

6. Ensemble ressort hélicoïdal (2) selon l'une des revendications 1 à 5, **caractérisé en ce que** le fil de support (34) s'étend le long d'un trajet circulaire (36), vu dans une direction longitudinale du ressort (4, 6), la partie support (46, 48) étant décalée par rapport audit trajet circulaire (36) dans une direction radiale (12, 14) et l'au moins une partie d'extrémité (42, 44) du fil de support (34) s'étendant de préférence le long du trajet circulaire (36) et en particulier de préférence seulement la partie support (46, 48) n'étant pas disposée ou pas entièrement disposée dans l'espace entre les spires successives (28, 30) du ressort hélicoïdal (20).

7. Ensemble ressort hélicoïdal (2) selon l'une des revendications 1 à 6, **caractérisé en ce que** les parties d'extrémité (42, 44) présentent chacune un angle d'enroulement (β) d'au moins 15°, de préférence d'au moins 30°, et en particulier de préférence d'au moins 45°.

8. Ensemble ressort hélicoïdal (2) selon l'une des revendications précédentes, **caractérisé en ce que** les deux spires successives (28, 30; 24, 26) du ressort hélicoïdal (20) et/ou de l'autre ressort hélicoïdal (16), entre lesquelles le fil de support (34) se loge, prennent la forme de spires libres et/ou le fil de support (34) se loge de sorte que, entre les spires mutuellement adjacentes (28, 30; 24, 26) du ressort hélicoïdal (20) et/ou de l'autre ressort hélicoïdal (16), les spires successives (28, 30, 24, 26) du ressort hélicoïdal (20) et/ou de l'autre ressort hélicoïdal (16) peuvent être comprimées en bloc, de préférence sans expansion ou compression dans une direction radiale (12, 14) du ressort hélicoïdal (20) et/ou de l'autre ressort hélicoïdal (16).

9. Ensemble ressort hélicoïdal (2) selon l'une des revendications précédentes, **caractérisé en ce que** la section transversale de fil du fil de support (34) a une forme autre qu'un cercle, éventuellement également autre qu'un ovale, éventuellement une forme de section transversale rectangulaire, carrée ou en losange, qui a une largeur en coupe transversale (b) dans une direction longitudinale (4, 6) qui diminue vers l'intérieur et/ou vers l'extérieur dans une direction radiale (12, 14), le degré de diminution de la largeur en coupe transversale (b) étant de préférence constant ou décroissant dans la direction radiale (12, 14) et la forme de la section transversale se rétrécissant particulièrement de préférence vers un point dans la direction radiale (12, 14), éventuellement à un angle (δ) au maximum de 90° ou au maximum de 75°.

10. Ensemble ressort hélicoïdal (2) selon l'une des revendications précédentes, **caractérisé en ce que** le fil de support (34) est hélicoïdal et/ou en forme de U et/ou en forme de pince, de préférence avec un angle d'enroulement (α) supérieur à 180°, en particulier supérieur à 360° ou supérieur à 720°.

11. Ensemble ressort hélicoïdal (2) selon l'une des revendications précédentes, **caractérisé en ce que** le ressort hélicoïdal extérieur (16) et le ressort hélicoïdal intérieur (20) se présentent chacun sous la forme de ressorts en arc et/ou présentent des directions d'enroulement opposées.

12. Procédé de fabrication d'un fil de support (34) pour un ensemble ressort hélicoïdal (2) selon l'une des revendications précédentes, comprenant les étapes du procédé consistant à:
fournir un fil avec deux parties d'extrémité (42, 44), façonner le fil sous forme d'un fil de support (34) hélicoïdal et/ou en forme de U et/ou en forme de pince, qui s'étend de préférence le long d'un trajet circulaire (36) dans la direction longitudinale du ressort (4, 6), les parties d'extrémité (42, 44) s'étendant en particulier de préférence le long du trajet circulaire (36),
déformer plastiquement, de préférence plier dans la direction radiale (12, 14) ou comprimer de manière à modifier sa section transversale, au moins une partie de fil entre les parties d'extrémité (42, 44), produisant ainsi une partie support (46, 48) faisant saillie dans la direction radiale (12, 14), qui est de préférence décalée dans la direction radiale (12, 14) par rapport au trajet circulaire (36).
